# EUROPÄISCHE PATENTANMELDUNG

(11) **EP 2 839 944 A1**
(43) Veröffentlichungstag der Anmeldung: **25.02.2015**
(21) Anmeldenummer: 14180607.5
(22) Anmeldetag: 14.12.2012
(51) Int. Cl.: B29C 49/42, B65G 21/20, B65G 51/03

(54) **Vorrichtung zum Transportieren von Kunststoffvorformlingen**

(30) Priorität: 14.12.2011 DE 102011056441
(62) Teilanmeldung aus: 12197248.3
(71) Anmelder: Krones AG, 93073 Neutraubling (DE)
(72) Erfinder: Beutl, Jürgen, 93073 Neutraubling (DE); Seidl, Andreas, 93073 Neutraubling (DE); Geltinger, Florian, 93073 Neutraubling (DE); Schröter, Carsten, 93073 Neutraubling (DE)
(74) Vertreter: Hannke, Christian

(57) **Zusammenfassung**

Vorrichtung (1) zum Transportieren von Kunststoffvorformlingen (10) entlang eines vorgegebenen Transportpfades (P) mit einer ersten Führungsschiene (2) zum Führen der Kunststoffvorformlinge (10), mit einer zweiten Führungsschiene (4) zum Führen der Kunststoffvorformlinge (10), wobei die Kunststoffvorformlinge (10) zwischen den Führungsschienen (2, 4) führbar sind und die Führungsschienen (2, 4) jeweils erste Stützflächen (12, 14) aufweisen, welche sich entlang des Transportpfades (P) erstrecken und welche die Kunststoffvorformlinge (10) während ihres Transports abstützen. Erfindungsgemäß weist die Vorrichtung (1) eine Beaufschlagungseinrichtung (42, 44) zum Beaufschlagen der Kunststoffvorformlinge (10) mit einem gasförmigen Medium auf, welche derart ausgebildet ist, dass die Kunststoffvorformlinge durch Beaufschlagung mit dem gasförmigen Medium entlang ihres Transportpfades transportiert werden, und wobei eine geometrische Position der Führungsschienen bezüglich einander veränderbar ist.

## Beschreibung

Die vorliegende Erfindung bezieht sich auf eine Vorrichtung zum Transportieren von Kunststoffvorformlingen. Derartige Vorrichtungen sind aus dem Stand der Technik bekannt und führen Kunststoffvorformlinge beispielsweise einem Heizaggregat zu, welches diese Kunststoffvorformlinge erwärmt. Dabei sind unterschiedlichste Transporteinrichtungen bekannt, wie beispielsweise Rollensortierer, welche zwei gegenüberliegende Rollen aufweisen, zwischen denen die Kunststoffvorformlinge transportiert werden. Daneben sind auch Transporteinrichtungen bekannt, welche die Kunststoffvorformlinge basierend auf der Schwerkraft derart fördern, dass die Kunststoffvorformlinge auf zwei seitlich angeordneten Schienen aufliegen und auf diesen gleiten.

Aus der WO 2008/083815 A1 ist ein Lufttransportsystem bekannt. Dieses Lufttransportsystem dient dabei zum Transportieren von Kunststoffflaschen.

Allerdings ist man bisher davon ausgegangen, dass ein derartiges Prinzip nicht analog auf den Transport von Kunststoffvorformlingen anwendbar ist, da bei Kunststoffflaschen deren Schwerpunkt wesentlich tiefer liegt als bei Kunststoffvorformlingen und daher, insbesondere bei einem schnellen Transport nicht so leicht ein Kippen auftreten kann wie bei Kunststoffvorformlingen.

Aus der DE 203 08 513 U1 ist eine Vorrichtung zum Zuführen von Vorformlingen zu einer Blasmaschine bekannt. Dabei ist eine Rutschenförderung vorgesehen, welche zwei Schienen aufweist, welche die Kunststoffvorformlinge unter ihren Tragringen stützen. Ein entsprechender Rollensortierer ist bodennah aufgestellt, wobei zwischen dem Rollensortierer und dem Ende der besagten Rutsche für die Vorformlinge ein die Vorformlinge anhebender Höhenförderer eingeschaltet ist.

Auch die EP 1 409 385 B1 beschreibt einen Luftförderer. Dabei dient dieser Luftförderer ebenfalls zum Transportieren von bereits umgeformten Kunststoffflaschen. Der Gegenstand dieser Druckschrift wird hiermit durch Bezugnahme vollumfänglich auch zum Gegenstand der vorliegenden Anmeldung gemacht.

Weiterhin tritt bei Kunststoffvorformlingen oftmals das Problem auf, dass diese die unterschiedlichsten Ausgestaltungen aufweisen können, und sich insbesondere in der Ausgestaltung ihres Tragrings und/oder Sicherungsrings und/oder des Gewindes unterscheiden. Es wäre daher wünschenswert, eine Transporteinrichtung zur Verfügung zu stellen, welche ohne allzu hohen Aufwand auf unterschiedliche Vorformlingsgeometrien umstellbar ist.

Daneben soll auch ein schneller Transport der Kunststoffvorformlinge ermöglicht werden. Diese Aufgaben werden durch eine Vorrichtung nach Anspruch 1 und auch eine Führungsschiene nach Anspruch 8 erreicht. Vorteilhafte Ausführungsformen und Weiterbildungen sind Gegenstand der Unteransprüche.

Eine erfindungsgemäße Vorrichtung zum Transportieren von Kunststoffvorformlingen entlang eines vorgegebenen Transportpfades weist eine erste Führungsschiene zum Führen der Kunststoffvorformlinge auf und eine zweite Schiene zum Führen der Kunststoffvorformlinge. Dabei sind die Kunststoffvorformlinge zwischen den Führungsschienen führbar und die Führungsschienen weisen jeweils erste Stützflächen auf, welche sich entlang des Transportpfades erstrecken und welche die Kunststoffvorformlinge während ihres Transportes abstützen.

Erfindungsgemäß weist die Vorrichtung eine Beaufschlagungseinrichtung zum Beaufschlagen der Kunststoffvorformlinge mit einem gasförmigen Medium auf, welche derart ausgebildet ist, dass die Kunststoffvorformlinge durch Beaufschlagung mit dem gasförmigen Medium entlang ihres Transportpfades transportiert werden. Weiterhin ist eine geometrische Position der Führungsschienen bezüglich einander veränderbar, insbesondere um eine Anpassung an unterschiedliche Gattungen an Kunststoffvorformlingen zu erreichen.

Es wird daher vorgeschlagen, die Kunststoffvorformlinge durch Beaufschlagung mit dem gasförmigen Medium und insbesondere durch Luftbeaufschlagung zu befördern. Die beiden Führungsschienen sind dabei insbesondere zumindest abschnittsweise und bevorzugt vollständig geradlinig ausgebildet. Daneben kann auch die Schwerkraft zum Fördern der Kunststoffvorformlinge genutzt werden.

Weiterhin ist die Transporteinrichtung vorteilhaft zwischen einer ersten Behandlungseinheit für die Kunststoffvorformlinge und einer zweiten Behandlungseinheit für die Kunststoffvorformlinge angeordnet. So kann beispielsweise zunächst ein Sortierer vorgesehen sein, der die Kunststoffvorformlinge sortiert und im Anschluss an die hier beschriebene Vorrichtung zum Transportieren der Kunststoffvorformlinge kann sich ein sogenanntes Eintaktrad anschließen, welches die Kunststoffvorformlinge beispielsweise einer Erwärmungseinrichtung zuführt.

Insbesondere stützen die Führungsschienen einen Tragring der Kunststoffvorformlinge während des Transports ab. Es wäre jedoch auch eine Abstützung über den sogenannten Sicherungsring der Kunststoffvorformlinge denkbar.

Durch die erfindungsgemäße Vorgehensweise kann eine höhere Maschinenleistung ermöglich werden. Weiterhin kann es gegenüber dem Stand der Technik verhindert werden, dass insbesondere bei leichten Vorformlingen häufiger Störungen des Vorformlingsflusses in der Vorformlingszuführschiene auftreten. Derartige Störungen können auch zu einem vollständigen Stillstand der Anlage führen. Weiterhin erlaubt die erfindungsgemäße Vorrichtung eine verbesserte Zugänglichkeit bei der Wartung und bei Sortenwechseln der Kunststoffvorformlinge.

Bei einer vorteilhaften Ausführungsform ist wenigstens eine Führungsschiene zum Verändern der geometrischen Position um eine Schwenkachse schwenkbar, die sich parallel zu dem Transportpfad der Kunststoffvorformlinge erstreckt. Auf diese Weise kann die Führungsschiene beispielsweise mehrere der besagten Stützflächen aufweisen, die je nach Schwenkstellung mit den Kunststoffvorformlingen zusammen wirken. Daneben oder zusätzlich ist es jedoch auch möglich, dass wenigstens eine Führungsschiene in ihrer Position quer zum Transportpfad, bzw. der Transportrichtung der Behältnisse bewegbar ist, um so einen Abstand der beiden Führungsschienen zueinander in ihrer Gesamtheit zu verändern. Vorteilhaft sind beide Führungsschienen jeweils um vorgegebene Schwenkachsen schwenkbar, wobei diese Achsen besonders bevorzugt parallel zueinander und besonders bevorzugt auch höhengleich sind. Bei einer weiteren vorteilhaften Ausführungsform weist die Vorrichtung Seitenführungselemente zum seitlichen Führen der Kunststoffvorformlinge auf. Diese Seitenführungselemente dienen dabei insbesondere zum Abstützen bzw. Führen eines Grundkörpers der Kunststoffvorformlinge, der unterhalb des Tragrings angeordnet ist. Dabei sind vorteilhaft auch diese Seitenführungselemente in einer Position zueinander veränderbar. Auf diese Weise kann eine Anpassung auf unterschiedliche Vorformlingsdurchmesser erreicht werden.

Vorteilhaft sind die Seitenführungselemente daher unterhalb der Führungsschienen angeordnet. Es wäre jedoch auch möglich, dass lediglich ein derartiges Seitenführungselement vorgesehen ist.

Bei einer weiteren vorteilhaften Ausführungsform weist die Beaufschlagungseinrichtung einen ersten Luftleitkanal auf, der oberhalb der Führungsschienen angeordnet ist und der die Mündungen der Kunststoffvorformlinge zu deren Transport mit dem gasförmigen Medium beaufschlagt. Dabei kann dieser Luftleitkanal eine Vielzahl von Öffnungen aufweise, die derart ausgestaltet sind, dass die Luft schräg auf die Kunststoffvorformlinge trifft und diese vorantreibt. Weiterhin ist es möglich, dass dieser Luftleitkanal von zwei Seiten bzw. von zwei einander gegenüberliegenden Zuführleitungen mit Druckluft beaufschlagt wird. Dabei kann jede dieser Zuführungen jeweils einer Führungsschiene zugeordnet sein.

Bei einer weiteren vorteilhaften Ausführungsform weist die Vorrichtung ein Niederhalterelement auf, welches zum Niederhalten der Kunststoffvorformlinge vorgesehen ist. Dabei kann es sich beispielsweise um ein zentral angeordnetes Niederhalteelement handeln, welches zwischen den beiden Führungsschienen angeordnet ist und welches verhindert, dass die Kunststoffvorformlinge nach oben ausweichen. Vorteilhaft ist daher dieses Niederhalteelement oberhalb des Transportpfades der Kunststoffvorformlinge angeordnet. Dieses Niederhalteelement kann sich dabei bevorzugt entlang des Transportpfades der Kunststoffvorformlinge erstrecken. Anstelle des besagten Niederhalteelementes wäre es jedoch auch möglich, dass die Führungsschienen selbst ein derartiges Niederhalteelement aufweisen, etwa, indem die Stützfläche für die Kunststoffvorformlinge als Wand einer Nut ausgebildet ist und sich darüber das Niederhalteelement in Form einer weiteren Begrenzungsfläche der Nut erstreckt. Dies wird unter Bezugnahme auf die Figuren genauer erläutert.

Bei einer weiteren vorteilhaften Ausführungsform ist auch eine Position des Niederhalteelements gegenüber der Führungsschienen in einer Längsrichtung der Kunststoffbehältnisse veränderbar.

Es wäre jedoch auch möglich, dass die beiden Führungsschienen jeweils mehrere derartige Nuten aufweisen, welche damit auf unterschiedliche Ausgestaltungen von Kunststoffvorformlingen anpassbar sind.

Bei einer weiteren vorteilhaften Ausführungsform weist wenigstens eine Führungsschiene eine zweite Stützfläche auf, welche sich entlang des Transportpfades der Kunststoffvorformlinge erstreckt und zwar derart, dass die Kunststoffvorformlinge wahlweise mittels der ersten Stützfläche oder der zweiten Stützfläche während ihres Transportes abstützbar sind. Durch die Wahl der jeweiligen Stützflächen kann damit eine Anpassung an unterschiedliche Kunststoffvorformlinge erreicht werden. Vorteilhaft kann dabei eine Anpassung an die unterschiedlichen Stützflächen durch eine Schwenkbewegung der Führungsschienen erreicht werden.

Die vorliegende Erfindung ist weiterhin auf eine Führungsschiene zum Transport von Kunststoffvorformlingen gerichtet, wobei sich die Führungsschiene entlang einer vorgegebenen Längsrichtung erstreckt und wobei die Führungsschiene eine erste Stützfläche aufweist, welche sich ebenfalls entlang der vorgegebenen Längsrichtung erstreckt und mittels derer der Kunststoffvorformling während seines Transports abstützbar ist.

Erfindungsgemäß weist die Führungsschiene eine zweite Stützfläche auf, welche sich entlang der vorgegebenen Längsrichtung erstreckt und mittels derer der Kunststoffvorformling während seines Transports abstützbar ist und die beiden Stützflächen sind derart an der Führungsschiene ausgebildet, dass der Kunststoffvorformling wahlweise von der ersten Stützfläche oder der zweiten Stützfläche während seines Transports abstützbar ist. Damit kann, wie oben erwähnt, durch die Wahl der Stützfläche eine Umstellung auf unterschiedliche Vorformlingsgeometrien erreicht werden.

Bei einer weiteren vorteilhaften Ausführungsform weist die Führungsschiene ein von der Führungsschiene abnehmbares Adapterelement auf, wobei sich dieses Adapterelement in einem an der Führungsschiene angeordneten Zustand entlang der vorgegebenen Längsrichtung erstreckt und wobei dieses Adapterelement eine dritte Stützfläche ausbildet, mittels derer der Kunststoffvorformling abstützbar ist. Dabei ist es weiterhin möglich, dass ein weiterer Abschnitt dieses Adapterelements gleichzeitig auch eine Seitenführungseinrichtung für den Kunststoffvorformling ausbildet. Besonders bevorzugt handelt es sich hierbei um ein Adapterelement, welches ohne ein Werkzeug an der Führungsschiene angeordnet oder auch von dieser entfernt werden kann. So kann es sich beispielsweise bei dem Adapterelement um ein aufclipbares Element handeln, welches in einem montierten Zustand formund/oder kraftschlüssig mit der Führungsschiene verbunden ist. Vorteilhaft handelt es sich bei dem Adapterelement um ein Kunststoffelement.

Bei einer weiteren vorteilhaften Ausführungsform ist auch wenigstens eine Stützfläche eine Führungsnut zum Führen der Kunststoffvorformlinge begrenzende Fläche. Wie oben erwähnt, kann dabei der Tragring der Vorformlinge in dieser Nut einliegen, sodass eine gegenüberliegende Fläche auch als Niederhalter für die Kunststoffvorformlinge dient. In diesem Fall kann gegebenenfalls auf dem oben erwähnten zentralen Niederhalter verzichtet werden.

Vorteilhaft findet bei der vorliegenden Erfindung eine Zwangsführung der Kunststoffvorformlinge durch Druckluft statt. Dabei kann Druckluft aus Lüftungsschlitzen strömen, welche mittels Gebläsen mit Druckluft beaufschlagt werden. Durch die aus den Lüftungsschlitzen auftretende Druckluft wird der Kunststoffvorformling an der Mündung angeblasen. Auf diese Weise entsteht der Antrieb für den Kunststoffvorformling. Eine horizontale Förderstrecke ist in geraden Abschnitten oder auch richtungsumlenkenden Kurvensegmenten möglich.

Wie oben erwähnt, kann dabei dieser beschriebene Transport der Kunststoffvorformlinge durch den erfindungsgemäßen Preformlufttransporteur von einem Preformsortierer zwischen verschiedenen Kunststoffvorformlinge verarbeitenden Maschinen, wie beispielsweise einem Sortierer, einer Blasmaschine, einem Inspektor oder dergleichen möglich sein.

Bei einer weiteren vorteilhaften Ausführung ist der Aufbau des Luftschachtes zweigeteilt bzw. der Luftschacht weist zwei zumindest teilweise getrennte Luftschächte auf.

Dazu wird bevorzugt die zugeführte Druckluft -insbesondere gleichmäßig - in zwei getrennte Luftzuführkanäle und Luftschächte verteilt, welche dann jeweils durch die zugehörigen Lüftungsschlitze den Antrieb für die Vorformlinge gewährleisten. So kann eine erste Zuführleitung vorgesehen sein, welche die Druckluft in den ersten Teilschacht zuführt, sowie eine zweite Zuführleitung, welche die Druckluft in den zweiten Teilschacht zuführt. Bevorzugt sind diese beiden Teilschächte symmetrisch zueinander ausgebildet, und besonders bevorzugt spiegelsymmetrisch bezüglich eines Transportpfads der Kunststoffvorformlinge. Unter voneinander getrennten Luftschächten wird verstanden, dass diese zwar in Strömungsverbindung miteinander stehen können, aber zumindest mechanisch voneinander getrennt bzw. trennbar sind.

Bevorzugt ist einer der beiden Luftschächte bzw. Teilschächte gegenüber dem anderen Luftschacht bzw. Teilschacht bewegbar. Dabei ist vorteilhaft der Teilschacht in seiner Gesamtheit bewegbar. Weiterhin sind bevorzugt die getrennten Luftschächte durch mindestens einen (hinsichtlich seiner geometrischen Lage) verstellbaren Luftschacht und einen stationären Luftschacht aufgebaut.

Bevorzugt sind mit dem mindestens einen verstellbaren Luftschacht zumindest einige der diesem zugeordneten und bevorzugt alle zugehörigen seitlichen Führungen mit verstellbar. Vorzugsweise sind wenigstens einige Führungselemente zum Führen der Kunststoffvorformlinge mit wenigstens einem Teilschacht und bevorzugt mit genau einem Teilschacht mechanisch gekoppelt.

Der beschriebene Kunststoffvorformlingslufttransporteur ermöglicht vorteilhaft einen sicheren Transport der Kunststoffvorformlinge durch eine einseitige gemeinsame Verstellung eines Luftschachtes sowie auch der Führungsschienen sowie besonders bevorzugt auch der Seitenführungseinrichtungen. Bevorzugt ist dabei eine gemeinsame Verstelleinrichtung vorgesehen, welche bewirkt, dass der Abstand zwischen einem Lüftungsschlitz und der Mündung der Kunststoffvorformlinge bei jedem Kunststoffvorformling gleich bleibt. Bei einer weiteren vorteilhaften Ausführungsform ist die Führungsschiene als Extrusionsbauteil ausgebildet. Weiterhin werden, wie oben erwähnt, zur Umstellung auf unterschiedliche Kunststoffvorformlinge (insbesondere auf unterschiedliche Vorformlingsdurchmesser) jeweils vorteilhaft nicht beide Führungsschienen verstellt, sondern nur eine der beiden Führungsschienen. Vorteilhaft ist der zuvor beschriebene Lufttransporteur sowohl für Preformen als auch für Behälter geeignet.

Weitere Vorteile und Ausführungsformen ergeben sich aus den beigefügten Zeichnungen:

Darin zeigen:
- Fig. 1: Eine Vorrichtung zum Transportieren von Kunststoffvorformlingen nach dem Stand der Technik;
- Fig. 2: eine erste Ausführungsform einer erfindungsgemäßen Vorrichtung zum Transportieren von Kunststoffvorformlingen;
- Fig. 3: eine zweite Ausführungsform einer Vorrichtung zum Transportieren von Kunststoffvorformlingen;
- Fig. 4: eine dritte Ausführungsform einer Vorrichtung zum Transportieren von Kunststoffvorformlingen;
- Fig. 5: eine Gesamtansicht einer Vorrichtung zum Transportieren von Kunststoffvorformlingen;
- Fig. 6: eine weitere Gesamtansicht einer Vorrichtung zum Transportieren von Kunststoffvorformlingen;
- Fig. 7: eine Ansicht zur Veranschaulichung der Luftförderung;
- Fig. 8a - 8c: drei Darstellungen zur Veranschaulichung von Führungsschienen; und
- Fig. 9a und 9b: zwei Darstellungen zur Veranschaulichung von Führungsschienen mit Adapterelementen.

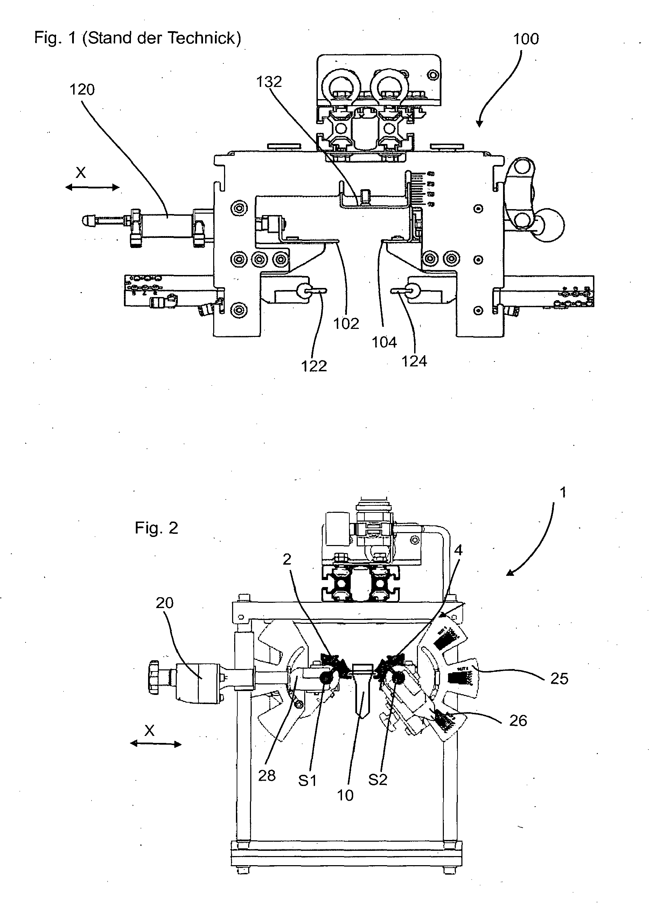

Figur 1 zeigt eine Schnittdarstellung einer Vorrichtung 100 zum Transportieren von Kunststoffvorformlingen (nicht gezeigt). Diese Vorrichtung weist dabei eine erste Führungsschiene 102 und eine zweite Führungsschiene 104 auf. Diese Führungsschienen stützen den Kunststoffvorformling an seinem Tragring und halten ihn auf diese Weise. Die Bezugszeichen 122 und 124 beziehen sich auf Seitenführungseinrichtungen und das Bezugszeichen 132 auf einen Niederhalter. Ein Verstellelement 120 dient zur einseitigen Verstellung der Führungsschienen, das heißt zur Bewegung der Führungsschiene 102 in der Richtung X. Damit erfolgt hiermit eine Führung des Kunststoffvorformlings an dessen Tragring zwischen den beiden Führungsschienen. Der Niederhalter 132 wird eingesetzt, um einen Aufstieg der Kunststoffvorformlinge zu verhindern.

Die Seitenführungseinrichtungen 122 und 124 führen den Schaft des Kunststoffvorformlings, wobei hier ebenfalls jeweils beidseitig symmetrisch verstellbare Geländer (d.h. Seitenführungseinrichtungen) vorgesehen sind. Ein möglicher Ablaufwinkel für die in Figur 1 gezeigten Führungsschienen 102 und 104 liegt bei 26°. Die Führungsschienen 102 und 104 werden bei dieser Ausführungsform pneumatisch verstellt, es wäre jedoch auch eine Verstellung mittels Linearmotorantrieben oder hydraulischen Antrieben oder dergleichen denkbar. Die Tragleisten (bzw. Führungsschienen) können bei der gezeigten Ausführungsform beispielsweise aus Edelstahl gebildet sein. Durch diese Ausführungsform kann es insbesondere bei leichten Vorformlingen häufiger zu Störungen des Vorformlingsflusses kommen.

Figur 2 zeigt eine erste Ausführungsform einer erfindungsgemäßen Vorrichtung 1. Bei dieser Ausführungsform ist ebenfalls eine erste Führungsschiene 2 vorgesehen sowie auch eine zweite Führungsschiene 4. Man erkennt, dass der Kunststoffvorformling 10 zwischen diesen beiden Führungsschienen geführt wird. Weiterhin sind diese beiden Führungsschienen jeweils um (sich senkrecht zur Figurenebene erstreckende) Schwenkachsen S1 und S2 verstellbar bzw. schwenkbar. Auf diese Weise ist, wie unten im Detail erläutert wird, eine Umstellung auf unterschiedliche Vorformlinge möglich. Der Transporpfad P der Kunststoffvorformlinge erstreckt sich hier ebenfalls senkrecht zur Figurenebene. Das Bezugszeichen 20 kennzeichnet eine Verstelleinrichtung, mit der hier die linke Führungsleiste 2 seitlich, das heißt in Richtung des Doppelpfeils X verstellt werden kann. Das Bezugszeichen 25 kennzeichnet eine Winkelskala, mit der abgelesen werden kann, in welcher Schwenkstellung (Feineinstellung) sich die jeweiligen Führungsleisten 2 und 4 jeweils befinden. Das Bezugszeichen 26 kennzeichnet ein Anzeigeelement bzw. einen Winkelzeiger, mittels dem die jeweilige Schwenkstellung abgelesen werden kann. Dabei ist sowohl eine stufenweise Einstellung, wie hier in drei verschiedene Einstellungen, möglich, als auch eine Feineinstellung zum Justieren der genauen Winkelstellung.

Die beiden Führungsschienen 2 und 4 sind dabei schwenkbar an einem Träger 28 angeordnet, so dass bei einer Schwenkung um die jeweiligen Schwenkachsen S1 und S2 auch die Führungsschienen mitgeschwenkt werden. Der Träger 28 wiederum ist vorzugsweise drehfest angeordnet. Die Schwenkung der beiden Führungsschienen 2 und 4 kann dabei manuell, motorisch oder pneumatisch erfolgen.

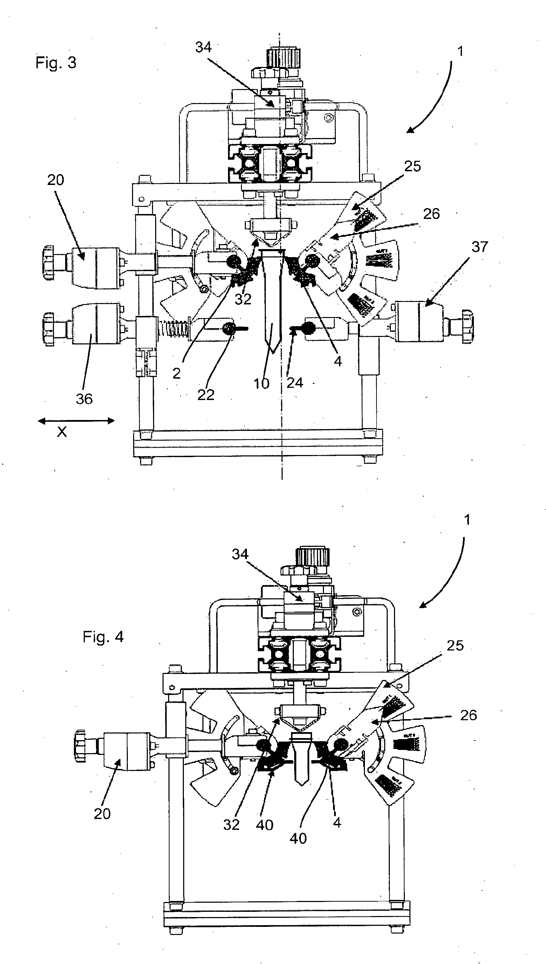

Figur 3 zeigt eine weitere Ausführungsform, wobei hier auch der zu transportierende Kunststoffvorformling 10 dargestellt ist. Wie in Figur 2 sind auch hier die beiden Führungsschienen 2 und 4 sowie die Verstelleinrichtung 20 dargestellt. Zusätzlich ist in Figur 3 auch ein Niederhalterelement 32 vorgesehen, welches oberhalb der Kunststoffvorformlinge 10 bzw. deren Transportpfad P angeordnet ist. Das Bezugszeichen 34 bezieht sich auf eine Verstelleinrichtung, welche eine Höhenstellung dieses Niederhalters 32 einstellt.

Die Bezugszeigen 22 und 24 beziehen sich auf Seitenführungselemente, welche den Kunststoffvorformling 10 an dessen Grundkörper führen. Dabei bezieht sich das Bezugszeichen 36 auf eine weitere Verstelleinrichtung, mit der diese Seitenführungseinrichtungen bzw. Preformgeländer ebenfalls in Richtung des Doppelpfeils X, das heißt nach links oder rechts, verschoben werden können. Dabei ist sowohl eine getrennte Einstellung dieser beiden Seitenführungseinrichtungen 22, 24 möglich als auch eine separate Einstellung. Man erkennt, dass sich bei der in Figur 3 gezeigten Ausführungsform ein anderer Winkel der beiden Führungsschienen 2, 4 ergibt als bei der in Figur 2 gezeigten Darstellung.

Die in Figur 4 gezeigte Ausführungsform entspricht im Wesentlichen der in Figur 3 gezeigten Ausführungsform, wobei hier zusätzlich an den Führungsschienen 2 und 4 jeweils ein Adapterelement 40 bzw. ein Verschleißprofil angeordnet ist. Auch dieses Verschleißprofil kann dabei zur Umstellung auf unterschiedliche Vorformlingsgeometrien verwendet werden.

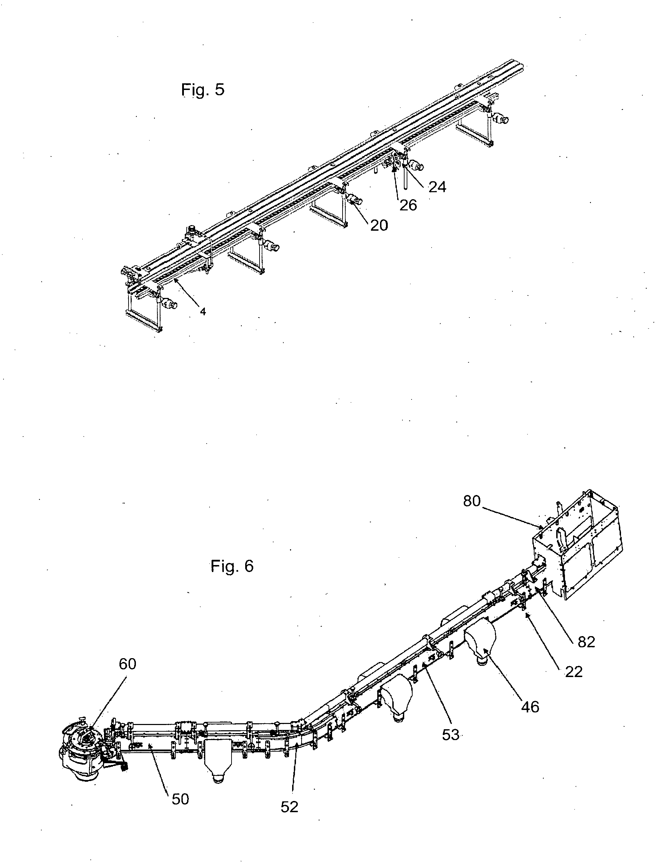

Figur 5 zeigt eine Gesamtdarstellung der erfindungsgemäßen Vorrichtung, wobei hier eine Verstelleinrichtung für den Führungsschienenabstand 20 sowie auch die Elemente 24 und 26 erkennbar sind.

Figur 6 zeigt eine weitere Darstellung, welche insbesondere auch die Einbindung der Transporteinrichtung in eine Anlage zeigt. Dabei bezieht sich das Bezugszeichen 60 auf einen Eintaktstern, der die Kunststoffvorformlinge getaktet an eine weitere Vorrichtung übergeben kann, beispielsweise an eine Blasmaschine, insbesondere eine Streckblasmaschine zum Umformen von Kunststoffvorformlingen zu Kunststoffbehältnissen. Entsprechend kennzeichnet das Bezugszeichen 50 einen Auslaufbereich der erfindungsgemäßen Transportvorrichtung. Man erkennt, dass die erfindungsgemäße Vorrichtung auch geeignet ist, die Kunststoffvorformlinge über eine gekrümmte Strecke zu fördern. Entsprechend kennzeichnet das Bezugszeichen 52 einen gekrümmten Abschnitt der Transporteinrichtung. Entsprechend kennzeichnet das Bezugszeichen 53 einen geraden Abschnitt der Transportvorrichtung.

Das Bezugszeichen 46 kennzeichnet eine Luftzuführung, um die zum Transport der Kunststoffvorformlinge nötige Luft zuzuführen bzw. zur Verfügung zu stellen. Das Bezugszeichen 80 kennzeichnet grob schematisch einen Rollensortierer, der zum Sortieren der Kunststoffvorformlinge dient und beispielsweise zwei einander gegenüberliegende Rollen aufweisen kann, zwischen denen die Kunststoffvorformlinge gefördert werden können. Das Bezugszeichen 82 kennzeichnet einen Einlauf für die erfindungsgemäße Transporteinrichtung. Weiterhin ist auch wieder eine Führungseinrichtung 22 zum Führen des Grundkörpers des Kunststoffvorformlings erkennbar.

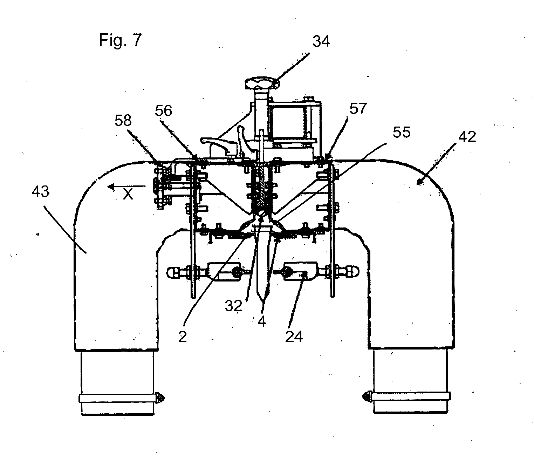

Figur 7 zeigt eine Schnittdarstellung einer erfindungsgemäßen Vorrichtung 1. Auch hier sind wieder die Luftzuführkanäle 46 vorgesehen, welche dann in die jeweiligen Luftzuführkanäle 42 und 43 münden. Mit diesen Luftzuführkanälen werden der verstellbare Luftschacht 56 und der stationäre Luftschacht 57 mit Druckluft versorgt, welche jeweils zum Fördern der Kunststoffvorformlinge 10 zugeführt wird. Zur besseren Übersichtlichkeit sind hier nicht alle Elemente, die oben beschrieben wurden dargestellt. Die Luft wird hier über die beiden Zuführeinrichtungen 42 und 43 in einen Luftleitkanal 55 geblasen und beaufschlagt auf diese Weise die Mündungen der Kunststoffvorformlinge mit einer Kraft, die die Kunststoffvorformlinge vorantreibt.

Auch hier werden die Kunststoffvorformlinge an ihren Tragring zwischen den zwei verstellbaren Führungsschienen 2, 4 geführt. Auch der in seiner Gesamtheit in Bezugszeichen 56 bezeichnete Luftschacht ist hier verstellbar und insbesondere in Richtung des Doppelpfeils X verschiebbar. Das Bezugszeichen 58 bezieht sich auf eine Verstelleinheit, um den gesamten Luftschacht 56 einschließlich der Führungsschiene 4 in Richtung des Doppelpfeils X zu verschieben. Das Bezugszeichen 57 kennzeichnet einen stationären Luftschacht.

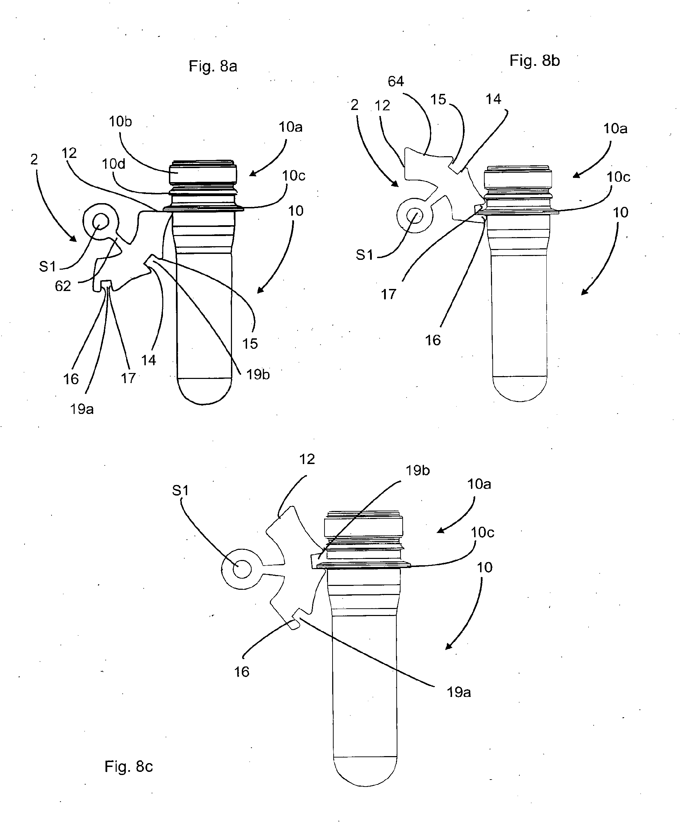

Die Figuren 8a - 8c zeigen drei Darstellungen einer erfindungsgemäßen Führungsschiene 2, die insbesondere bei der oben beschriebenen Vorrichtung Anwendung finden kann. Man erkennt, dass die in ihrer Gesamtheit mit 2 bezeichnete Führungsschiene (die Führungsschiene 4 ist hier nicht dargestellt) mehrere Stützflächen 12, 14, 16 aufweist, die je nach Schwenkstellung der Führungsschiene 2 in ihrer Gesamtheit im wesentlichen waagerecht stehen können und somit den Kunststoffvorformling unterhalb seines Tragrings 10c führen können. Das Bezugszeichen 10d kennzeichnet einen Sicherungsring, der üblicherweise oberhalb des Tragrings angeordnet ist, und das Bezugszeichen 10b ein Gewinde des Kunststoffvorformlings. Das Bezugszeichen 10a kennzeichnet den gesamten Mündungsbereich des Kunststoffvorformlings und das Bezugszeichen 10e einen Grundkörper, der von den oben erwähnten seitlichen Führungsschienen geführt werden kann.

Die Bezugszeichen 17 und 15 beziehen sich jeweils auf obere Begrenzungsränder, die gemeinsam mit den Auflageflächen 14 und 16 jeweils Nuten 19 begrenzen, innerhalb derer die Tragringe geführt werden. Diese oberen Begrenzungsränder können dort auch als Niederhalterelemente wirken.

In den drei Darstellungen 8a - 8c ist die Führungsschiene 2 in drei verschiedenen Schwenkstellungen bezüglich ihrer Schwenkachse S1 gezeigt, und entsprechend wird der Kunststoffvorformling 10 jeweils durch unterschiedliche Stützflächen 12, 14 und 16 geführt. Vorteilhaft sind dabei alle Stützflächen 12, 14, 16 und Nuten 19a, 19b radial um die jeweiligen Schwenkachsen S1 und S2 angeordnet.

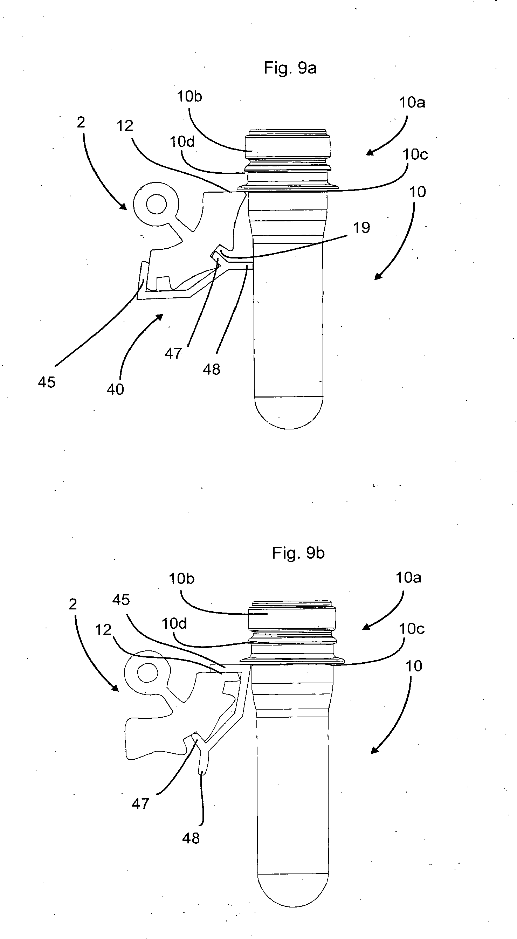

Die Figuren 9a, 9b zeigen eine weitere Ausführungsform einer erfindungsgemäßen Führungsschiene. In diesem Fall ist an der eigentlichen Führungsschiene 2 ein abnehmbares Adapterelement 40 (beispielsweise aus Kunststoff) angeordnet. Dabei ist einerseits ein erstes Klemmmittel 45 vorgesehen, welches einen Teil der Führungsschiene 2 umgreift, um auf diese Weise an die Führungsschiene geklemmt zu werden. Ein zweites Klemmmittel 47 greift in die Nut 19 der Führungsschicht ein. Ein Vorsprung 48 kann bei dieser Ausführungsform genutzt werden, um als Seitenführungselement für den Kunststoffvorformling 10 dienen.

Bei der in Figur 9b gezeigten Darstellung ist eine Stützfläche 45 (das Klemmmittel dient hier auch als Stützfläche) des Adapterelements 46 vorgesehen, um selbst als Führungsschiene für den Kunststoffvorformling bzw. dessen Tragring zu dienen. Vorteilhaft sind auch hier wieder alle Stützflächen12, 14, 16 und Nuten 19a, 19b, erstes Klemmmittel 45 (auch als Stützfläche) und zweites Klemmmittel 47 und Seitenführungselement 48 radial um die jeweiligen Schwenkachsen S1 und S2 angeordnet. Auf diese Weise kann durch Ausnutzung einer Vielzahl von unterschiedlichen Führungsflächen eine Umstellung der Anlage auf unterschiedliche Typen von Kunststoffvorformlingen erreicht werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: linke Führungsschiene
- 4: rechte Führungsschiene
- 10: Kunststoffvorforming
- 10a: Mündungsbereich
- 10b: Gewinde
- 10c: Tragring
- 10d: Sicherungsring
- 10e: Grundkörper
- 12, 14, 16: Stützflächen
- 15, 17: Begrenzungsränder
- 19a,b: Nuten
- 20: Verstelleinrichtung
- 22: Seitenführungseinrichtung
- 24: Seitenführungseinrichtung
- 25: Winkelskala
- 26: Winkelzeiger
- 28: Träger
- 32: Niederhalterelement
- 34: Verstelleinrichtung
- 40: Adapterelement
- 42: Luftzuführkanal
- 43: Luftzuführkanal
- 45: erstes (auch eine Stützfläche ausbildendes) Klemmmittel
- 46: Luftzuführung
- 47: zweites Klemmmittel
- 48: Vorsprung
- 50: Auslaufbereich
- 52: gekrümmter Abschnitt der Transporteinrichtung
- 53: gerader Abschnitt der Transporteinrichtung
- 55: Luftleitkanal
- 56: Luftschacht (verstellbar)
- 57: stationärer Luftschacht
- 58: Verstelleinheit
- 60: Eintaktstern
- 80: Rollensortierer
- 82: Einlauf
- 100: Vorrichtung (Stand der Technik)
- 102: erste Führungsschiene (Stand der Technik)
- 104: zweite Führungsschiene (Stand der Technik)
- 120: Verstellelement (Stand der Technik)
- 122: Seitenführungseinrichtung/Seitenführungselement (Stand der Technik)
- 124: Seitenführungseinrichtung/Seitenführungselement (Stand der Technik)
- 132: Niederhalter (Stand der Technik)

- X: Doppelpfeil (seitliche Bewegung)
- S1, S2: Schwenkachsen
- P: Transportpfad des Kunststoffvorformlings

## Patentansprüche

1. Vorrichtung (1) zum Transportieren von Kunststoffvorformlingen (10) entlang eines vorgegebenen Transportpfades (P) mit einer ersten Führungsschiene (2) zum Führen der Kunststoffvorformlinge (10), mit einer zweiten Führungsschiene (4) zum Führen der Kunststoffvorformlinge (10), wobei die Kunststoffvorformlinge (10) zwischen den Führungsschienen (2, 4) führbar sind und die Führungsschienen (2, 4) jeweils erste Stützflächen (12, 14) aufweisen, welche sich entlang des Transportpfades (P) erstrecken und welche die Kunststoffvorformlinge (10) während ihres Transports abstützen,
**dadurch gekennzeichnet, dass**
die Vorrichtung (1) eine Beaufschlagungseinrichtung (42, 43) zum Beaufschlagen der Kunststoffvorformlinge (10) mit einem gasförmigen Medium aufweist, welche derart ausgebildet ist, dass die Kunststoffvorformlinge durch Beaufschlagung mit dem gasförmigen Medium entlang ihres Transportpfades transportiert werden, und wobei eine geometrische Position der Führungsschienen bezüglich einander veränderbar ist, wobei die Kunststoffvorformlinge durch Beaufschlagung mit dem gasförmigen Medium über eine Luftzuführung (46) entlang ihres Transportpfades transportiert werden, wobei die Luftzuführung (46) in die Beaufschlagungseinrichtung (42, 43) mündet, und wobei die Luftzuführung (46) zwei getrennte Luftschächte (56, 57) umfasst.

2. Vorrichtung (1) nach Anspruch 1,
**dadurch gekennzeichnet, dass**
die Vorrichtung Seitenführungselemente (22, 24) zum seitlichen Führen der Kunststoffvorformlinge (10) aufweist.

3. Vorrichtung (1) nach wenigstens einem der vorangegangenen Ansprüche,
**dadurch gekennzeichnet, dass**
die Luftzuführung (46) oberhalb der Führungsschienen angeordnet ist und die Mündungen der Kunststoffvorformlinge zu deren Transport mit dem gasförmigen Medium beaufschlagt.

4. Vorrichtung (1) nach Anspruch 3,
**dadurch gekennzeichnet, dass**
der Luftzuführung (46) eine Vielzahl von Öffnungen aufweist, die derart ausgestaltet sind, dass die Luft schräg auf die Kunststoffvorformlinge trifft und diese vorantreibt.

5. Vorrichtung (1) nach Anspruch 3,
**dadurch gekennzeichnet, dass**
der Luftzuführung (46) von zwei Seiten mit Druckluft beaufschlagt wird.

6. Vorrichtung nach Anspruch 1,
**dadurch gekennzeichnet, dass**
eine erste Zuführleitung (43) vorgesehen ist, welche Druckluft in den ersten Teilschacht führt (56) sowie eine zweite Zuführleitung (42), welche Druckluft in den zweiten Teilschacht (57) führt.

7. Vorrichtung (1) nach wenigstens einem der vorangegangenen Ansprüche,
**dadurch gekennzeichnet, dass**
die Vorrichtung (1) ein Niederhalteelement (32) aufweist, welches bevorzugt oberhalb der Führungsschienen (2, 4) angeordnet ist.

8. Vorrichtung (1) nach Anspruch 7,
**dadurch gekennzeichnet, dass**
eine Position des Niederhalteelements (32) gegenüber den Führungsschienen (2, 4) in einer Längsrichtung der Kunststoffbehältnisse (10) veränderbar ist.

9. Vorrichtung (1) nach wenigstens einem der vorangegangenen Ansprüche,
**dadurch gekennzeichnet, dass**
wenigstens eine Führungsschiene eine zweite Stützfläche (14, 16) aufweist, welche sich entlang des Transportpfades (P) der Kunststoffvorformlinge (10) erstreckt, derart, dass die Kunststoffvorformlinge (10) wahlweise mittels der ersten Stützfläche (12) oder der zweiten Stützfläche (14, 16) während ihres Transports abstützbar sind.

10. Vorrichtung (1) nach Anspruch 1,
**dadurch gekennzeichnet, dass**
die getrennten Luftschächte mit mindestens einem verstellbaren Luftschacht (56) und einem stationären Luftschacht (57) aufgebaut sind.

11. Vorrichtung (1) nach Anspruch 10,
**dadurch gekennzeichnet, dass**
mit dem mindestens einen verstellbaren Luftschacht (56) alle zugehörigen seitlichen Führungen (2, 22) mit verstellbar sind.

12. Vorrichtung nach Anspruch 1,
**dadurch gekennzeichnet, dass**
wenigstens einige Führungselemente zum Führen der Kunststoffvorformlinge mit wenigstens einem Teilschacht (56, 57) und bevorzugt mit genau einem Teilschacht (56, 57) mechanisch gekoppelt sind.

13. Vorrichtung nach Anspruch 9,
**dadurch gekennzeichnet, dass**
die beiden Stützflächen (12, 14, 16) derart an der Führungsschiene (2, 4) ausgebildet sind, dass der Kunststoffvorformling wahlweise von der ersten Stützfläche (12) oder der zweiten Stützfläche (14,16) während seines Transports abstützbar ist, wobei wenigstens eine Führungsschiene (2, 4) zum Verändern der geometrischen Position um eine Schwenkachse (S1, S2) schwenkbar ist, die sich parallel zu dem Transportpfad der Kunststoffvorformlinge (10) erstreckt.

14. Vorrichtung nach wenigstens einem der vorangegangenen Ansprüche,
**dadurch gekennzeichnet, dass**
diese ein von der Führungsschiene (2, 4) abnehmbares Adapterelement (40) aufweist, wobei sich dieses Adapterelement (40) in einem an der Führungsschiene (2, 4) angeordneten Zustand entlang der vorgegebenen Längsrichtung erstreckt und eine dritte Stützfläche (45) ausbildet, mittels derer der Kunststoffvorformling abstützbar ist.

15. Vorrichtung nach wenigstens einem der vorangegangenen Ansprüche,
**dadurch gekennzeichnet, dass**
wenigstens eine Stützfläche (14, 16) eine Führungsnut (19a,19b) zum Führen der Kunststoffvorformlinge (10) begrenzende Fläche ist.
